# EUROPEAN PATENT APPLICATION

(11) **EP 4 790 810 A2**
(43) Date of publication of application: **12.08.2026**
(21) Application number: 26156619.4
(22) Date of filing: 17.02.2023
(51) Int. Cl.: H01M 50/244

(54) **BATTERY BOX, BATTERY, AND ELECTRIC APPARATUS**

(30) Priority: 10.03.2022 CN 202220531184 U
(62) Document number(s) of the earlier application(s) in accordance with Art. 76 EPC: 23765755.6 / 4 456 292
(71) Applicant: Contemporary Amperex Technology (Hong Kong) Limited, Hong Kong (HK)
(72) Inventor: CHEN, Guize, Ningde, 352100 (CN); BAO, Cong, Ningde, 352100 (CN); ZENG, Chao, Ningde, 352100 (CN)
(74) Representative: Gong, Jinping

(57) **Abstract**

This application relates to a battery box, a battery, and an electric apparatus. A first end plate (10), a second end plate (20), and a first middle frame (30) jointly enclose a semi-accommodating space (50) with an opening at one end, and a height of the semi-accommodating space (50) in an entry direction (a) of a battery module (200) entering the space is smaller than a height of the battery module (200) in the direction, that is, the semi-accommodating space (50) is shallower than the battery module (200). In this way, when the battery module (200) is placed into the semi-accommodating space (50), it is less likely to fall and cause damage to the battery module (200). After the battery module (200) is safely placed into the semi-accommodating space (50), a second middle frame (40) is spliced with the first middle frame (30) to seal the semi-accommodating space (50), thereby encapsulating the battery module (200).

## Description

### CROSS-REFERENCE TO RELATED APPLICATIONS

This application refers to Chinese Patent Application No. 202220531184.4, filed on March 10, 2022 and entitled "BATTERY BOX, BATTERY, AND ELECTRIC APPARATUS", which is incorporated herein by reference in its entirety.

### TECHNICAL FIELD

This application relates to the field of battery technologies, and in particular, to a battery box, a battery, and an electric apparatus.

### BACKGROUND

With the development of new energy technologies, batteries have been more widely used in daily life. A battery typically includes a battery module and a battery box, and the battery module is installed inside the battery box. Because a battery module has a complex structure, it is often difficult to enter a battery box accurately during installation, which leads to low installation efficiency. In addition, an improper operation in an installation process may even cause collision between a battery module and a battery box, affecting usage performance of the battery module.

### SUMMARY

In view of this, it is necessary to provide a battery box, a battery, and an electric apparatus, so as to solve the problem that it is difficult for an existing battery module to enter a battery box.

According to a first aspect, this application provides a battery box configured to accommodate a battery module. The battery box includes:
a first end plate and a second end plate arranged opposite each other;
a first middle frame connected between the first end plate and the second end plate, where the first end plate, the second end plate, and the first middle frame jointly enclose a semi-accommodating space with an opening at one end, and a height of the semi-accommodating space in an entry direction of the battery module is smaller than a height of the battery module; and
a second middle frame spliced with the first middle frame along the entry direction of the battery module to seal the opening.

In the technical solution of the embodiments of this application, because the height of the semi-accommodating space in the entry direction of the battery module is smaller than the height of the battery module, depth of the semi-accommodating space is relatively small for the battery module, and the battery module can be placed into the semi-accommodating space more safely and conveniently.

In some embodiments, the first middle frame includes a first side plate, a second side plate, and a third side plate, where the first side plate is connected between the first end plate and the second end plate along a first direction; and the second side plate and the third side plate are respectively formed at two opposite ends of the first side plate along a second direction intersecting with the first direction and are connected between the first end plate and the second end plate located at the current ends respectively.

In the entry direction of the battery module, heights of the second side plate and third side plate are smaller than the height of the battery module.

In the technical solution of the embodiments of this application, the first side plate, the second side plate, and the third side plate jointly enclose a first middle frame with a U-shaped structure, so that the battery module can be better limited in the first middle frame to implement stable installation of the battery module.

In some embodiments, the first middle frame, the first end plate, and the second end plate are integrally formed to obtain a first box assembly.

In the technical solution of the embodiments of this application, an integrally-formed connection manner can make a structure of the first box assembly simpler and stable with no additional connecting member required, which prevents a connecting member from occupying installation space inside the first box assembly, thereby increasing energy density of a battery.

In some embodiments, the second middle frame includes a fourth side plate, a fifth side plate, and a sixth side plate, where the fourth side plate is connected between the first end plate and the second end plate along the first direction; and the fifth side plate and the sixth side plate are formed at opposite ends of the fourth side plate along the second direction respectively and are connected between the first end plate and the second end plate located at the current ends respectively.

The fifth side plate is spliced with the second side plate, and the sixth side plate is spliced with the third side plate.

In the technical solution of the embodiments of this application, the fourth side plate, the fifth side plate, and the sixth side plate jointly enclose the second middle frame with a U-shaped structure, where the second middle frame can be in fit connection with the first middle frame to jointly seal and encapsulate the battery module.

In some embodiments, the first middle frame, the first end plate, and the second end plate are integrally formed to obtain a first box assembly; and the fourth side plate, the fifth side plate and the sixth side plate are integrally formed to obtain a second box assembly; where the first box assembly and the second box assembly are jointly constructed to form a battery box.

In the technical solution of the embodiments of this application, an integrally-formed connection manner can make a structure of the second middle frame simpler and reduce the use of a connecting member, thereby reducing installation space occupied by a connecting member inside the battery box.

In some embodiments, one of the first middle frame and the second middle frame is provided with a first fixing member, and the other is provided with a second fixing member fitting the first fixing member, and the second middle frame is spliced with the first middle frame along the entry direction of the battery module through the first fixing member and the second fixing member.

In the technical solution of the embodiments of this application, quick splicing of the first middle frame with the second middle frame can be implemented through cooperation between the first fixing member and the second fixing member, thereby improving assembly efficiency.

In some embodiments, the first fixing member is a buckle, and the second fixing member is a slot snap-fitted with the buckle.

In the technical solution of the embodiments of this application, structures of the buckle and slot are relatively simple, which can further reduce occupied installation space inside the battery box after connection.

According to a second aspect, this application provides a battery including the foregoing battery box and a battery module accommodated inside the battery box.

In some embodiments, the battery module includes a battery cell and a wire harness isolation plate and busbar connected to two opposite ends of the battery cell, respectively, and the end of the battery cell connected to the wire harness isolation plate and the end connected to the busbar are connected to a first end plate and a second end plate, respectively.

According to a third aspect, this application provides an electric apparatus including an electric main body and the foregoing battery.

In the foregoing battery box, battery, and electric apparatus, the first end plate, the second end plate, and the first middle frame jointly enclose the semi-accommodating space with an opening at one end, and the height of the semi-accommodating space in the entry direction of the battery module entering the space is smaller than the height of the battery module in the direction, that is, the semi-accommodating space is shallower than the battery module. In this way, when the battery module is placed into the semi-accommodating space, it is less likely to fall and cause damage to the battery module. After the battery module is safely placed into the semi-accommodating space, the second middle frame is spliced with the first middle frame to seal the semi-accommodating space, thereby encapsulating the battery module.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the embodiments below. The accompanying drawings are merely intended to illustrate the embodiments and are not intended to limit this application. In addition, in all the accompanying drawings, same parts are indicated by same accompanying symbols. In the accompanying drawings:
FIG. 1 is a schematic diagram of an overall structure of a battery box according to one or more embodiments;
FIG. 2 is a schematic structural diagram of a battery according to one or more embodiments;
FIG. 3 is a schematic structural diagram of a first box assembly in the battery box in FIG. 1;
FIG. 4 is a schematic structural diagram of a second middle frame in the battery box in FIG. 1; and
FIG. 5 is a schematic structural diagram of a battery module according to one or more embodiments.

Reference signs in the drawings: 1000. battery; 100. battery box; 200. battery module; 201. battery cell; 202. wire harness isolation plate; 203. busbar; 10. first end plate; 20. second end plate; 30. first middle frame; 40. second middle frame; 50. semi-accommodating space; 31. first side plate; 32. second side plate; 33. third side plate; 34. second fixing member; 41. fourth side plate; 42. fifth side plate; 43. sixth side plate; 44. first fixing member; a. entry direction; b. first direction; and c. second direction.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application pertains. The terms used herein are intended to merely describe the specific embodiments rather than to limit this application. The terms "include", "comprise", and "have" and any other variations thereof in the specification, claims, and brief description of drawings of this application are intended to cover non-exclusive inclusions.

In the description of the embodiments of this application, the terms "first", "second", and the like are merely intended to distinguish between different objects, and shall not be understood as any indication or implication of relative importance or any implicit indication of the number, sequence, or primary-secondary relationship of the technical features indicated. In the description of the embodiments of this application, "a plurality of" means more than two unless otherwise specifically stated.

In this specification, reference to "embodiment" means that specific features, structures, or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on the embodiments of this application.

In the description of the embodiments of this application, unless otherwise specified and defined explicitly, the technical terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Persons of ordinary skill in the art can understand specific meanings of these terms in this application as appropriate to specific situations.

Currently, from a perspective of the market development, application of traction batteries is being more extensive. Traction batteries have been not only used in energy storage power source systems such as hydroelectric power plants, thermal power plants, wind power plants, and solar power plants, but also widely used in many other fields including electric transportation tools such as electric bicycles, electric motorcycles, and electric vehicles, military equipment, and aerospace. With continuous expansion of application fields of traction batteries, market demands for traction batteries are also expanding.

Traction batteries need to be assembled after being produced, that is, a plurality of produced battery cells are connected in series, parallel, or series-parallel to obtain a battery module. Then, the battery module is accommodated in a battery box to obtain an overall structure of a battery.

With increasingly extensive application of batteries, people have increasingly high requirements for batteries. Therefore, batteries need to have greater energy density and smaller volumes. Under such premise, an accommodating space of a battery box often just fits a battery module, with no remaining gap. Such structure can also ensure that a battery module is positionally stable without shake in a battery box during a loading or transportation process of a battery, so as to prevent the battery module from being damaged.

However, because the battery module closely fits the accommodating space of the battery box, the battery module is prone to bump against the battery box when the battery module is loaded into the battery box, affecting usage performance of the battery module.

In addition, an existing battery box typically has an opening at an upper end, that is, a battery module is loaded into a battery box from top to bottom along a height direction. In this process, due to a relatively large depth of the battery box in the height direction, the battery module is prone to fall when loaded into the battery box from top to bottom, which leads to damage to the battery module.

In view of the foregoing problems, a spliced battery box may be designed by optimizing a middle frame structure of a battery box to make a depth of a battery module relatively small when the battery module is loaded, so that the battery module can be stably placed into the battery box, and then the battery box can be sealed through splicing. In this way, assembly efficiency of a battery can be improved, and safety performance of the battery module can be guaranteed.

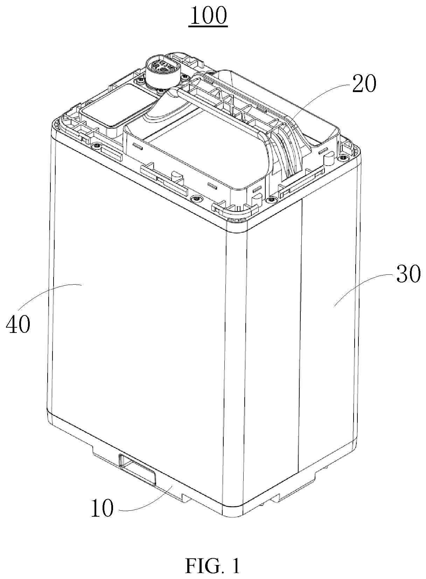

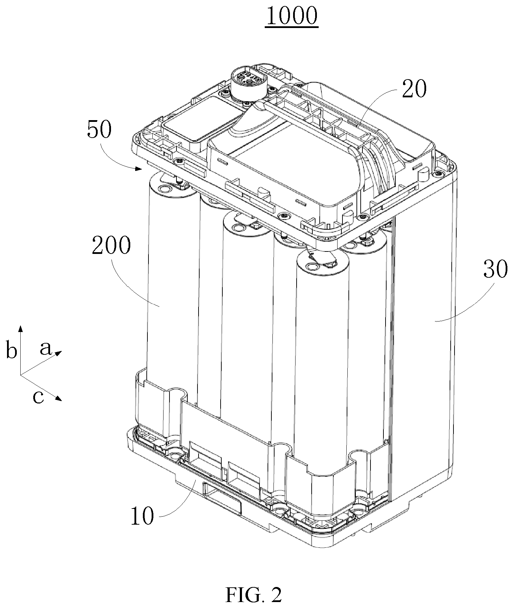

Refer to FIGs. 1 and 2. One or more embodiments of this application provide a battery box 100 configured to accommodate a battery module 200. The battery box 100 includes a first end plate 10, a second end plate 20, a first middle frame 30, and a second middle frame 40. The first end plate 10 and the second end plate 20 are arranged opposite each other. The first middle frame 30 is connected between the first end plate 10 and the second end plate 20. The first end plate 10, the second end plate 20, and the first middle frame 30 jointly enclose a semi-accommodating space 50 with an opening at one end, and a height of the semi-accommodating space 50 in an entry direction a of the battery module 200 is smaller than a height of the battery module 200. The second middle frame 40 is spliced with the first middle frame 30 along the entry direction a of the battery module 200 to seal the opening.

Specifically, in an embodiment, the first end plate 10 is a base of the battery box 100, and the second end plate 20 is an upper cover of the battery box 100. The first middle frame 30 is connected between the base and the upper cover. The first middle frame 30, the base, and the upper cover jointly enclose the semi-accommodating space 50 with an opening at one end.

It should be noted that the entry direction a of the battery module 200 is horizontal, that is, a direction of the opening of the semi-accommodating space 50 is horizontal, and the battery module 200 enters the semi-accommodating space 50 through the opening along the horizontal direction. Taking a cylindrical battery as an example, a height of the cylindrical battery in a horizontal direction is usually smaller than a height in a vertical direction. Therefore, when the battery module 200 enters the semi-accommodating space 50 along the horizontal direction, a depth the semi-accommodating space 50 is relatively small, which is more convenient for the battery module 200 to be placed in the semi-accommodating space 50.

In addition, because the height of the semi-accommodating space 50 in the horizontal direction is smaller than the height of the battery module 200 in this direction, there may be a holding position with a certain height on the battery module 200 when the battery module 200 is placed into the semi-accommodating space 50, so that the battery module 200 can be stably placed into the semi-accommodating space 50.

After the battery module 200 is placed into the semi-accommodating space 50, the second middle frame 40 and the first middle frame 30 are spliced to form a complete middle frame structure, implementing sealed installation of the battery module 200.

The foregoing structure can make the battery module 200 enter the battery box 100 more conveniently and stably, guaranteeing safety and reliability in an installation process of the battery module 200.

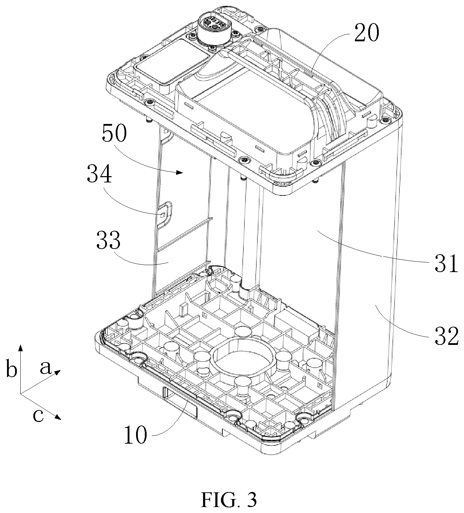

Refer to FIG. 3. In some embodiments, the first middle frame 30 includes a first side plate 31, a second side plate 32, and a third side plate 33. The first side plate 31 is connected between the first end plate 10 and the second end plate 20 along a first direction b; and the second side plate 32 and the third side plate 33 are respectively formed at two opposite ends of the first side plate 31 along a second direction c intersecting with the first direction b and are connected between the first end plate 10 and the second end plate 20 located at the current ends respectively. In the entry direction a of the battery module 200, heights of the second side plate 32 and the third side plate 33 are smaller than the height of the battery module 200.

Specifically, the first direction b is a vertical direction, and the second direction c is a horizontal direction perpendicular to the vertical direction. The first side plate 31 is connected between the base and the upper cover along the vertical direction; and the second side plate 32 and the third side plate 33 are respectively connected to the two opposite ends of the first side plate 31 along the horizontal direction and are connected between the base and the upper cover. That is, the first middle frame 30 is a U-shaped structure formed by the first side plate 31, the second side plate 32, and the third side plate 33, and is connected between the base and the upper cover.

Therefore, the heights of the second side plate 32 and the third side plate 33 in the entry direction a of the battery module 200 is the height of the semi-accommodating space 50. Specifically, the heights of the second side plate 32 and the third side plate 33 in the entry direction a of the battery module 200 are set to half the height of the battery module 200 in this direction, which can ensure that the battery module 200 is stably limited when placed into the semi-accommodating space 50, and allow the battery module 200 to enter the semi-accommodating space 50 more smoothly.

In some embodiments, the first middle frame 30, the first end plate 10, and the second end plate 20 are integrally formed to obtain a first box assembly. Compared with a connection and combination manner in prior art using a connecting member such as a bolt, an integrally-formed connection manner can make an overall structure of the first box assembly more stable. In addition, because no additional connecting member is required, space occupied by a connecting member can be reduced, allowing for a higher space utilization rate inside a battery box 100, thereby increasing energy density of a battery 1000.

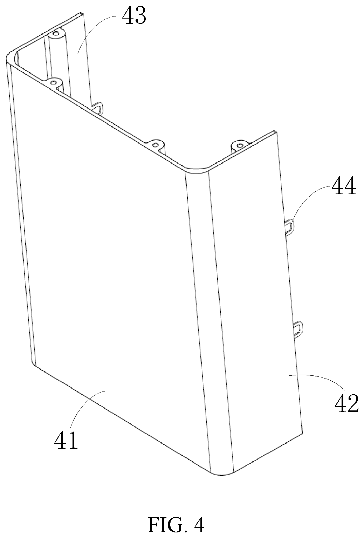

Refer to FIG. 4. In some embodiments, the second middle frame 40 includes a fourth side plate 41, a fifth side plate 42, and a sixth side plate 43. The fourth side plate 41 is connected between the first end plate 10 and the second end plate 20 along the first direction b; and the fifth side plate 42 and the sixth side plate 43 are respectively formed at two opposite ends of the fourth side plate 41 along the second direction c and are connected between the first end plate 10 and the second end plate 20 located at the current ends respectively. In addition, the fifth side plate 42 is spliced with a second side plate 32, and the sixth side plate 43 is spliced with a third side plate 33.

Specifically, the second middle frame 40 and the first middle frame 30 are structurally complementary. The second middle frame 40 has another U-shaped structure formed by the fourth side plate 41, the fifth side plate 42, and the sixth side plate 43, and the second middle frame 40 and the first middle frame 30 are connected between the base and the upper cover in a manner of making their openings opposite each other. In this way, an integral accommodating space is obtained, and the battery module 200 is sealed therein.

The splicing manner can allow the second middle frame 40 to be quickly and hermetically connected to the first middle frame 30, the base, and the upper cover, thereby making the battery 1000 assembled more conveniently and quickly.

Furthermore, the fourth side plate 41, the fifth side plate 42, and the sixth side plate 43 are integrally formed to obtain a second box assembly. The first box assembly and the second box assembly form the battery box 100.

To simplify the structure of the second middle frame 40, the fourth side plate 41, the fifth side plate 42, and the sixth side plate 43 are integrally formed in manufacturing. Moreover, the second box assembly and the first box assembly which are each integrally formed are spliced to form the integral battery box 100.

In some embodiments, one of the first middle frame 30 and the second middle frame 40 is provided with a first fixing member 44, and the other is provided with a second fixing member 34 fitting the first fixing member 44, and the second middle frame 40 is spliced with the first middle frame 30 along the entry direction a of the battery module 200 through the first fixing member 44 and the second fixing member 34.

Specifically, the first middle frame 30 is provided with the second fixing member 34, and the second middle frame 40 is provided with the first fixing member 44. Furthermore, the second fixing member 34 is arranged on the second side plate 32 and the third side plate 33, and the first fixing member 44 is arranged on the fifth side plate 42 and the sixth side plate 43 and fits the second fixing member 34. Therefore, when the first middle frame 30 and the second middle frame 40 are spliced, the second fixing member 34 on the second side plate 32 and third side plate 33 is in fit connection with the second fixing member 34 on the fifth side plate 42 and sixth side plate 43, so that the first middle frame 30 and the second middle frame 40 are interconnected. In this way, the first middle frame 30 and the second middle frame 40 can be quickly spliced.

In some embodiments, the first fixing member 44 is a buckle, and the second fixing member 34 is a slot snap-fitted with the buckle. The buckle and the slot are snap-fitted with each other, so that the first middle frame 30 and the second middle frame 40 can be quickly spliced. The buckle and the slot being snap-fitted with each other can further save space. It can be understood that the first fixing member 44 and the second fixing member 34 can be connected using another method, for example, using a bolt, which is not further described in detail here.

Refer to FIG. 2 again. Based on the same concept as the foregoing battery box 100, this application provides a battery 1000 including the foregoing battery box 100 and the battery module 200 accommodated in the battery box 100.

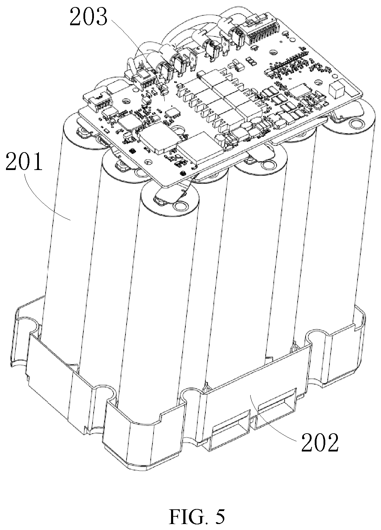

Refer to FIG. 5. In some embodiments, the battery module 200 includes a battery cell 201 and a wire harness isolation plate 202 and busbar 203 connected to two opposite ends of the battery cell 201, respectively. The end of the battery cell 201 connected to the wire harness isolation plate 202 and the end connected to the busbar 203 are connected to the first end plate 10 and the second end plate 20, respectively.

Specifically, the wire harness isolation plate 202 and the busbar 203 are arranged at the bottom and the top of the battery cell 201, respectively, and the busbar 203 is welded to a pole of the battery cell 201. Furthermore, the connected battery module 200 is placed into the semi-accommodating space 50 along the horizontal direction, so that the wire harness isolation plate 202 is connected to the base and the busbar 203 is connected to the upper cover, thereby implementing stable installation of the battery module 200 in the semi-accommodating space 50.

Based on the same concept as the foregoing battery 1000, this application provides an electric apparatus including an electric main body and the foregoing battery 1000.

In specific usage of this application, the wire harness isolation plate 202 and the busbar 203 are arranged at the bottom and the top of the battery cell 201, respectively, so as to form the battery module 200. The connected battery module 200 is placed into the semi-accommodating space 50 through an opening along the horizontal direction. After the battery module 200 is placed stably, the buckle on the second middle frame 40 is snap-fitted with the slot in the first middle frame 30, so that the first middle frame 30 and the second middle frame 40 are spliced. In this way, the second middle frame 40 seals the opening, and the second middle frame 40, the first middle frame 30, the base, and the upper cover form the integral battery box 100.

The battery box 100, the battery 1000, and the electric apparatus according to the foregoing embodiments have at least the following advantages:

(1) The height of the semi-accommodating space 50 in the entry direction a of the battery module 200 is smaller than the height of the battery module 200, which makes the battery module 200 placed into the semi-accommodating space 50 more stably and safely, thereby effectively preventing the battery module 200 from being damaged in an assembly process.

(2) The first middle frame 30, the first end plate 10, and the second end plate 20 are integrally formed to obtain the first box assembly, so that the structure of the first box assembly is more simple, which reduces space occupied by a connecting member inside the battery box 100, thereby increasing the energy density of the battery 1000.

(3) The first middle frame 30 and the second middle frame 40 are spliced through snap-fitting, allowing for a simple structure and facilitating operation. In addition, the buckle and the slot occupy smaller space, helping to save space.

According to some embodiments of this application, referring to FIG. 1, this application provides a battery box 100 including a base and an upper cover arranged opposite each other. A first middle frame 30 is connected between the base and the upper cover, and the first middle frame 30, the base, and the upper cover jointly enclose a semi-accommodating space 50 with an opening at one end. A height of the semi-accommodating space 50 in an entry direction a of a battery module 200 is half a height of the battery module 200 in this direction, so that there is a holding position with half the height on the battery module 200 when the battery module 200 is placed into the semi-accommodating space 50, which makes the battery module 200 stably enter the semi-accommodating space 50. In addition, because the height of the semi-accommodating space 50 is half the height of the battery module 200, the battery module 200 is less likely to fall when entering the semi-accommodating space 50, thereby guaranteeing safety performance of the battery module 200.

Furthermore, a second middle frame 40 is snap-fitted with a slot in the first middle frame 30 through a buckle, so that the first middle frame 30 and the second middle frame 40 can be spliced, thereby forming a complete accommodating space, and then the battery module 200 is sealed in the accommodating space.
Further embodiments of the present invention are provided in the following. It should be noted that the numbering used in the following section does not necessarily need to comply with the numbering used in the previous sections:
Embodiment 1. A battery box configured to accommodate a battery module, wherein the battery box comprises:
   a first end plate and a second end plate arranged opposite each other;
   a first middle frame connected between the first end plate and the second end plate, wherein the first end plate, the second end plate, and the first middle frame jointly enclose a semi-accommodating space with an opening at one end, and a height of the semi-accommodating space in an entry direction of the battery module is smaller than a height of the battery module; and
   a second middle frame spliced with the first middle frame along the entry direction of the battery module to seal the opening.
Embodiment 2. The battery box according to embodiment 1, wherein the first middle frame comprises a first side plate, a second side plate, and a third side plate, wherein the first side plate is connected between the first end plate and the second end plate along a first direction; the second side plate and the third side plate are respectively formed at two opposite ends of the first side plate along a second direction intersecting with the first direction and are connected between the first end plate and the second end plate located at the current ends respectively; and
heights of the second side plate and third side plate are smaller than the height of the battery module in the entry direction of the battery module.
Embodiment 3. The battery box according to embodiment 1 or 2, wherein the first middle frame, the first end plate, and the second end plate are integrally formed to obtain a first box assembly.
Embodiment 4. The battery box according to embodiment 2, wherein the second middle frame comprises a fourth side plate, a fifth side plate, and a sixth side plate, wherein the fourth side plate is connected between the first end plate and the second end plate along the first direction; the fifth side plate and the sixth side plate are respectively formed at two opposite ends of the fourth side plate along the second direction and are connected between the first end plate and the second end plate located at the current ends respectively; and
the fifth side plate is spliced with the second side plate, and the sixth side plate is spliced with the third side plate.
Embodiment 5. The battery box according to embodiment 4, wherein the first middle frame, the first end plate, and the second end plate are integrally formed to obtain a first box assembly; and the fourth side plate, the fifth side plate, and the sixth side plate are integrally formed to obtain a second box assembly, wherein
the first box assembly and the second box assembly are jointly constructed to form the battery box.
Embodiment 6. The battery box according to any one of embodiments 1 to 5, wherein one of the first middle frame and the second middle frame is provided with a first fixing member, and the other is provided with a second fixing member fitting the first fixing member; and the second middle frame is spliced with the first middle frame along the entry direction of the battery module through the first fixing member and the second fixing member.
Embodiment 7. The battery box according to embodiment 6, wherein the first fixing member is a buckle, and the second fixing member is a slot snap-fitted with the buckle.
Embodiment 8. A battery, comprising the battery box according to any one of embodiments 1 to 7 and a battery module accommodated inside the battery box.
Embodiment 9. The battery according to embodiment 8, wherein the battery module comprises a battery cell and a wire harness isolation plate and busbar connected to two opposite ends of the battery cell, respectively; and the end of the battery cell connected to the wire harness isolation plate and the end connected to the busbar are connected to the first end plate and the second end plate, respectively.
Embodiment 10. An electric apparatus, comprising an electric main body and the battery according to embodiment 8 or 9.

In conclusion, it should be noted that the foregoing embodiments are merely for description of the technical solutions of this application rather than for limiting this application. Although this application has been described in detail with reference to the foregoing embodiments, persons of ordinary skill in the art should appreciate that they can still make modifications to the technical solutions described in these embodiments or make equivalent replacements to some or all technical features thereof without departing from the scope of the technical solutions of the embodiments of this application. All such modifications and equivalent replacements shall fall within the scope of the claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A battery box configured to accommodate a battery module, wherein the battery box comprises:
a first end plate and a second end plate arranged opposite each other;
a first middle frame connected between the first end plate and the second end plate, wherein the first end plate, the second end plate, and the first middle frame jointly enclose a semi-accommodating space with an opening at one end, and a height of the semi-accommodating space in an entry direction of the battery module is smaller than a height of the battery module; and
a second middle frame spliced with the first middle frame along the entry direction of the battery module to seal the opening;
wherein the first middle frame, the first end plate, and the second end plate are integrally formed to obtain a first box assembly.

2. The battery box according to claim 1, wherein the first middle frame comprises a first side plate, a second side plate, and a third side plate, wherein the first side plate is connected between the first end plate and the second end plate along a first direction; the second side plate and the third side plate are respectively formed at two opposite ends of the first side plate along a second direction intersecting with the first direction and are connected between the first end plate and the second end plate located at the current ends respectively; and
heights of the second side plate and third side plate are smaller than the height of the battery module in the entry direction of the battery module.

3. The battery box according to claim 2, wherein the second middle frame comprises a fourth side plate, a fifth side plate, and a sixth side plate, wherein the fourth side plate is connected between the first end plate and the second end plate along the first direction; the fifth side plate and the sixth side plate are respectively formed at two opposite ends of the fourth side plate along the second direction and are connected between the first end plate and the second end plate located at the current ends respectively; and
the fifth side plate is spliced with the second side plate, and the sixth side plate is spliced with the third side plate.

4. The battery box according to claim 3, wherein the first middle frame, the first end plate, and the second end plate are integrally formed to obtain a first box assembly; and the fourth side plate, the fifth side plate, and the sixth side plate are integrally formed to obtain a second box assembly, wherein
the first box assembly and the second box assembly are jointly constructed to form the battery box.

5. The battery box according to any one of claims 1 to 4, wherein one of the first middle frame and the second middle frame is provided with a first fixing member, and the other is provided with a second fixing member fitting the first fixing member; and the second middle frame is spliced with the first middle frame along the entry direction of the battery module through the first fixing member and the second fixing member.

6. The battery box according to claim 5, wherein the first fixing member is a buckle, and the second fixing member is a slot snap-fitted with the buckle.

7. A battery, comprising the battery box according to any one of claims 1 to 6 and a battery module accommodated inside the battery box.

8. The battery according to claim 7, wherein the battery module comprises a battery cell and a wire harness isolation plate and busbar connected to two opposite ends of the battery cell, respectively; and the end of the battery cell connected to the wire harness isolation plate and the end connected to the busbar are connected to the first end plate and the second end plate, respectively.

9. An electric apparatus, comprising an electric main body and the battery according to claim 7 or 8.
